# EUROPEAN PATENT APPLICATION

(11) **EP 3 590 651 A1**
(43) Date of publication of application: **08.01.2020**
(21) Application number: 18760689.2
(22) Date of filing: 28.02.2018
(51) Int. Cl.: B23K 35/26, B22F 1/00, B22F 1/02, B23K 35/14, B23K 35/22, C22C 13/00, C22C 13/02

(54) **SOLDER MATERIAL, SOLDER PASTE, FOAM SOLDER AND SOLDER JOINT**

(30) Priority: 28.02.2017 JP 2017037088
(71) Applicant: Senju Metal Industry Co., Ltd, Tokyo 120-8555 (JP)
(72) Inventor: NISHINO Tomoaki, Tokyo 120-8555 (JP); HATTORI Takahiro, Tokyo 120-8555 (JP); KAWASAKI Hiroyoshi, Tokyo 120-8555 (JP); ROPPONGI Takahiro, Tokyo 120-8555 (JP); SOMA Daisuke, Tokyo 120-8555 (JP); SATO Isamu, Tokyo 120-8555 (JP)
(74) Representative: Barker Brettell LLP
(86) International application number: PCT/JP2018/007466
(87) International publication number: WO 2018/159664

(57) **Abstract**

A solder material capable of suppressing the occurrence of electromigration is provided.

The solder material is core ball 1A which comprises spherical core 2A composed of Cu or a Cu alloy, and solder layer 3A coating core 2A, and wherein solder layer 3A has:
a Cu content of 0.1 mass% or more and 3.0 mass% or less,
a Bi content of 0.5 mass% or more and 5.0 mass% or less,
a Ag content of 0 mass% or more and 4.5 mass% or less, and
a Ni content of 0 mass% or more and 0.1 mass% or less,
with Sn being the balance.

## Description

### TECHNICAL FIELD

The present invention relates to a solder material in which a core of a metal is coated with a solder alloy, and to a solder paste, a formed solder and a solder joint using this solder material.

### BACKGROUND ART

In recent years, with the development of small information devices, the downsizing of the electronic components to be mounted has been rapidly progressing. In order to respond to the narrowing of connection terminals and the reduction of the mounting area due to the demand for downsizing, a ball grid array (hereinafter, referred to as "BGA") having electrodes disposed on the back surface is applied to electronic components.

An example of electronic components to which BGA is applied is a semiconductor package. In a semiconductor package, a semiconductor chip having electrodes is sealed with a resin. Solder bumps are formed on the electrodes of the semiconductor chip. These solder bumps are formed by joining solder balls to the electrodes of the semiconductor chip. A semiconductor package to which BGA is applied is placed on a printed circuit board so that each solder bump is in contact with a conductive land of the printed circuit board, and mounted on the printed circuit board by joining the solder bumps melted by heating with the lands.

The narrowing of the connection terminals and the reduction of the mounting area is causing miniaturization of the joined part by solder and an increase in the current density at the joined part. Due to the increase in the current density at the joined part, the occurrence of electromigration at the joined part by solder is a concern.

A technique for preparing a solder material called a copper core solder ball, in which a copper core having a Ni layer of 1.0 to 5.0 µm on the surface of a copper ball having a diameter of 20 to 80 µm, is coated with a layer of a solder alloy of Sn-Ag-Cu composition, has been proposed (see, for example, PTL 1). A solder material in which a core of a metal is coated with a solder layer, as in a copper core solder ball, is composed of a solder alloy of the same composition and compared to a solder material called a solder ball having no core of a metal, it is known to suppress the electromigration phenomenon.

### CITATION LIST

### PATENT LITERATURE

PTL 1: Japanese Patent Laid-Open No. 2010-103501

### SUMMARY OF INVENTION

### TECHNICAL PROBLEM

However, as described above, since the possibility of occurrence of electromigration is increasing with the miniaturization of the joined part, a solder material that can further suppress electromigration than a copper core solder ball having a solder layer with the Sn-Ag-Cu composition disclosed in PTL 1 is required.

The present invention has been made to solve such problem, and aims to provide a solder material which can further suppress the occurrence of electromigration than conventional solder materials, and a solder paste, a formed solder and a solder joint using this solder material.

### SOLUTION TO PROBLEM

The present inventors have found that adding a certain amount of Bi to a solder layer of a solder material including a core of a metal and a solder layer coating the core, and suppressing the temperature rise of the joined part allows suppression of the occurrence of electromigration much more than a conventional solder ball or a conventional solder material having a core of a metal.

Therefore, the present invention is as follows.
(1) A solder material comprising a core of a metal and a solder layer coating the core, wherein the solder layer has:
   a Cu content of 0.1 mass% or more and 3.0 mass% or less,
   a Bi content of 0.5 mass% or more and 5.0 mass% or less,
   a Ag content of 0 mass% or more and 4.5 mass% or less, and
   a Ni content of 0 mass% or more and 0.1 mass% or less,
   with Sn being the balance.
(2) A solder material comprising a core of a metal and a solder layer coating the core, wherein the solder layer has:
   a Cu content of 0.1 mass% or more and 3.0 mass% or less,
   a Bi content of more than 1.0 mass% and 5.0 mass% or less, and
   a Ni content of 0 mass% or more and 0.1 mass% or less, and
   contains no Ag, with Sn being the balance.
(3) The solder material according to (1), wherein the Ag content is more than 1.5 mass% and 4.5 mass% or less.
(4) The solder material according to any one of (1) to (3), wherein the core is a metal of Cu, Ni, Ag, Au, Al, Mo, Mg, Zn, or Co, or an alloy of any combination of the metal.
(5) The solder material according to any one of (1) to (4), wherein the core is a spherical core ball.
(6) The solder material according to any one of (1) to (4), wherein the core is a columnar core column.
(7) The solder material according to any one of (1) to (6), wherein the core coated with a layer consisting of one or more elements selected from Ni and Co is coated with the solder layer.
(8) A solder paste using the solder material according to any one of (1) to (7).
(9) A formed solder using the solder material according to any one of (1) to (7).
(10) A solder joint using the solder material according to any one of (1) to (7).

### ADVANTAGEOUS EFFECTS OF INVENTION

In the present invention, since the heat generated at the joined part and the heat transmitted to the joined part are dissipated by a core of a metal, the temperature rise of the joined part is suppressed, and a state in which the metal elements hardly move is maintained. Therefore, the effect of suppressing electromigration by containing Bi can be obtained.

### BRIEF DESCRIPTION OF DRAWINGS

[Fig. 1] Fig. 1 is a cross-sectional drawing showing a schematic structure of the core ball of the present embodiment.
[Fig. 2] Fig. 2 is a block diagram showing an example of a solder bump formed by a core ball.
[Fig. 3] Fig. 3 is a cross-sectional drawing showing a schematic structure of the Cu core column of the present embodiment.

### DESCRIPTION OF EMBODIMENTS

The solder material of the present embodiment is composed of a core of a metal and a solder layer coating this core. If the core is a sphere, the solder material is referred to as a core ball. The following embodiment describes a core ball.

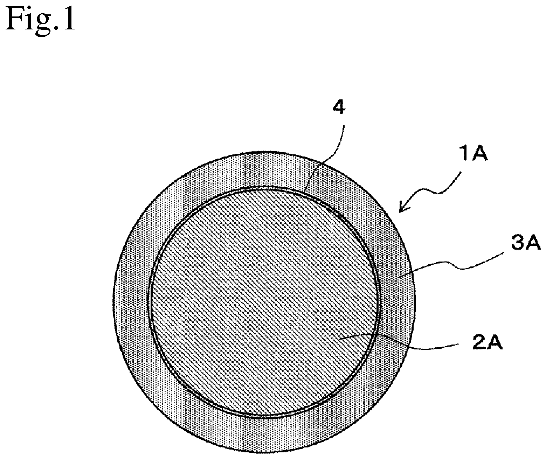

Fig. 1 is a cross-sectional drawing showing a schematic structure of the core ball of the present embodiment. Core ball 1A of the present embodiment is composed of spherical core 2A and solder layer 3A coating core 2A.

Core 2A can have a composition of Cu alone or an alloy composition containing Cu as a main component. When core 2A is composed of an alloy, the Cu content is 50 mass% or more. Moreover, since core 2A may have a better electrical conductivity than that of solder layer 3A which is a Sn-based solder alloy, except for Cu, it may also be a metal of Ni, Ag, Au, Al, Mo, Mg, Zn, or Co, or an alloy of any combination of the metal.

It is preferable that core 2A have a sphericity of 0.95 or more from the viewpoint of controlling the standoff height. The sphericity is more preferably 0.990 or more. In the present invention, the sphericity represents the deviation from a true sphere. The sphericity can be determined by various methods such as, for example, the least square circle method (LSC method), the minimum zone circle method (MZC method), the maximum inscribed circle method (MIC method) and the minimum circumscribed circle method (MCC method). Specifically, the sphericity is an arithmetic mean value calculated when the diameter of each of 500 cores 2A is divided by the long diameter, and it indicates that the closer the value is to an upper limit of 1.00, the closer it is to a true sphere. In the present invention, the length of the long diameter and the length of the diameter refer to the length measured by an ultra quick vision, ULTRA QV 350-PRO measurement device manufactured by Mitutoyo.

It is preferable that the diameter of core 2A constituting the present invention be 1 to 1000 µm. Within this range, spherical core 2A can be stably produced, and connection short-circuiting when the pitch between the terminals is narrow can be suppressed.

Solder layer 3A is composed of a Sn-Ag-Cu-Bi based solder alloy or a Sn-Cu-Bi based solder alloy. In core ball 1A, solder layer 3A is formed by performing solder plating on the surface of core 2A.

The Bi content is 0.5 mass% or more and 5.0 mass% or less. If the Bi content is less than 0.5 mass%, the effect of suppressing electromigration is insufficient. Moreover, when the Bi content exceeds 5.0 mass%, the effect of suppressing the electromigration is also reduced. The Bi content is preferably more than 1.0 mass% and 5.0 mass% or less, more preferably 1.5 mass% or more and 3.0 mass% or less.

The Cu content is 0.1 mass% or more and 3.0 mass% or less. If the Cu content is less than 0.1 mass %, the melting temperature does not sufficiently decrease, and heating at a high temperature becomes necessary when joining the joining material to the substrate, which may cause thermal damage to the substrate. Furthermore, the wettability is insufficient, and the solder does not wet and spread during joining. Moreover, when the Cu content exceeds 3.0 mass%, the melting temperature rises, and furthermore the wettability also decreases. The Cu content is preferably 0.3 mass% or more and 1.5 mass% or less.

The Ag content is 0 mass% or more and 4.5 mass% or less, and is an optional additional element. When more than 0 mass% and 4.5 mass% or less of Ag is added, the effect of suppressing electromigration is further improved compared to an alloy without Ag. When the Ag content exceeds 4.5 mass%, the mechanical strength decreases. In the case of a Sn-Ag-Cu-Bi based solder alloy, the Ag content is preferably 0.1 mass% or more and 4.5 mass% or less, more preferably more than 1.5 mass% and 4.5 mass% or less.

The Ni content is 0 mass% or more and 0.1 mass% or less, and is an optional additional element. When more than 0 mass% and 0.1 mass% or less of Ni is added, the wettability is improved compared to an alloy without Ni. When the Ni content exceeds 0.1 mass%, the melting temperature rises, and the wettability also decreases. When adding Ni, the Ni content is preferably 0.02 mass% or more and 0.08 mass% or less.

It is preferable that the diameter of core ball 1A be 3 to 2000 µm.

On core ball 1A, diffusion preventing layer 4 may be provided between core 2A and solder layer 3A. Diffusion preventing layer 4 is composed of one or more elements selected from Ni, Co, and the like, and prevents the Cu constituting core 2A from diffusing into solder layer 3A.

In a solder alloy containing Bi, the occurrence of electromigration is suppressed. In core ball 1A in which solder layer 3A is formed by a solder alloy having a composition containing Bi on the surface of core 2A, the effect of suppressing electromigration by Bi is maintained by core 2A.

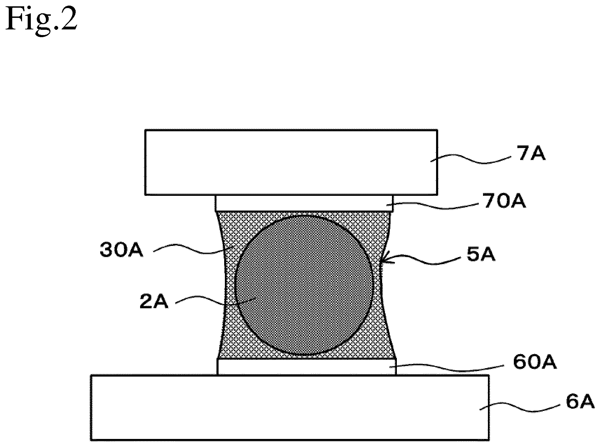

Fig. 2 is a block diagram showing an example of a solder bump formed by a core ball. In solder bump 5A, electrode 60A of substrate 6A and electrode 70A of semiconductor package 7A are joined by solder alloy 30A. In solder bump 5A using core ball 1A shown in Fig. 1, even if the weight of semiconductor package 7A joined to substrate 6A by solder alloy 30A is applied to solder bump 5A, semiconductor package 7A can be supported by core 2A, which does not melt at the melting point of solder alloy 30A. Therefore, solder bump 5A is prevented from being crushed by the weight of semiconductor package 7A itself.

The reason for this may be that, since Bi has a larger electrical resistance than Sn, when a current flows in the solder bump containing Bi, the temperature of the solder bump rises compared with a solder bump not containing Bi. As the current density increases due to the miniaturization of solder bumps, the temperature rise becomes significant. Moreover, the temperature of the solder bump also rises when the heat generated in the semiconductor package or the like is transferred to the solder bump. The metal atoms move more easily due to the temperature of the solder bump rising, which is considered to generate electromigration.

On the other hand, in core ball 1A of the present embodiment, solder layer 3A coats core 2A of Cu having high thermal conductivity compared to Sn. In solder bump 5A formed by such core ball 1A, core 2A is contained in solder alloy 30A that joins substrate 6A and semiconductor package 7A. Since this allows dissipation of the heat generated in solder bump 5A and the heat transmitted from semiconductor package 7A or the like by core 2A of Cu, the temperature rise of solder bump 5A is suppressed, and a state in which the metal elements hardly move is maintained. Therefore, the effect of suppressing electromigration by containing Bi is maintained.

In addition, Cu has a higher electrical conductivity than Sn. In a solder bump formed by a solder ball, the current density on the surface of the solder bump becomes high, but in solder bump 5A formed by core ball 1A, the current density of core 2A becomes higher than the current density on the surface of solder bump 5A. Therefore, the increase of current density in solder bump 5A is suppressed, and the occurrence of electromigration is suppressed.

Furthermore, with solder bump 5A formed by core ball 1A of the present embodiment in which solder layer 3A is formed by a solder alloy having a composition containing Bi on the surface of core 2A, the required predetermined strengths, the strength against impacts such as falling, and the strength against expansion and contraction due to temperature change called heat cycle, can be obtained.

When describing examples of the applications of the solder material according to the present invention, the solder material is used for a solder paste in which a solder powder, core ball 1A and a flux are kneaded. Here, in cases where core ball 1A is used for a solder paste, the "core ball" may be referred to as a "core powder".

The "core powder" is an assembly of a large number of core balls 1A in which individual core balls 1A have the above-mentioned characteristics. For example, the core powder is differentiated from a single core ball in its use form, such as being blended as a powder in a solder paste. Similarly, since the core powder is usually also treated as an assembly when used for the formation of solder bumps, the "core powder" used in such a form is differentiated from a single core ball. In cases where the "core ball" is used in a form called "core powder", generally, the diameter of the core ball is 1 to 300 µm.

In addition, the solder material according to the present invention is used for a formed solder in which core balls 1A are dispersed in the solder. For the solder paste and the formed solder, for example, a solder alloy having a composition of Sn-3Ag-0.5Cu (each numerical value is in mass%) is used. Note that the present invention is not limited to this solder alloy. Furthermore, the solder material according to the present invention is used for a solder joint of an electronic component. In addition, the solder material according to the present invention may be applied to the form of a column, pillar or pellet having columnar Cu as a core.

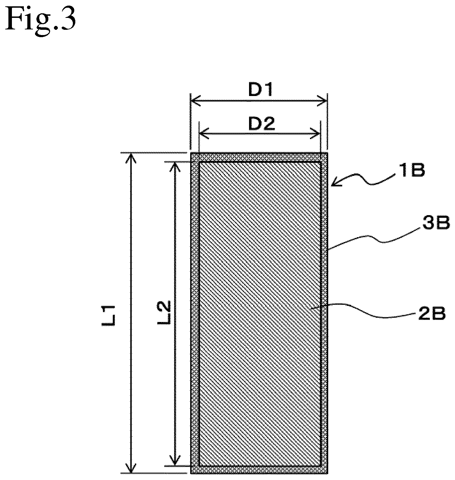

Fig. 3 is a cross-sectional drawing showing a schematic structure of a Cu core column of the present embodiment. The above-mentioned example described the case where spherical core ball 1A is used as a solder material, and it is not limited thereto. For example, a cylindrical Cu core column 1B can also be used as a solder material. Since the configuration, materials, and the like of the Cu core column 1B are the same as those of the above-mentioned Cu core ball 1A, only the differing parts will be described below.

Cu core column 1B according to the present invention includes Cu column 2B, which is an example of a core having a predetermined size and securing a gap between the semiconductor package and the printed circuit board, and solder layer 3B, which is an example of a coating layer coating Cu column 2B. Note that, in the present example, Cu column 2B was configured in a cylindrical shape, but it is not limited thereto, and may be, for example, a square pole.

It is preferable that the Cu column 2B have a wire diameter (diameter) D2 of 20 to 1000 µm and a length L2 of 20 to 10000 µm.

The thickness of the solder layer 3B is not particularly limited, and for example, 100 µm (one side) or less is sufficient. In general, it may be 20 to 50 µm.

It is preferable that the Cu core column 1B have a wire diameter (diameter) D1 of 22 to 2000 µm and a length L1 of 22 to 20000 µm.

### EXAMPLES

The core balls of the Examples and the core balls and the solder balls of the Comparative Examples were prepared with the compositions shown in Table 1 below, and an electromigration test measuring the resistance to electromigration (EM) when large current is applied was conducted. The composition ratio in Table 1 is in mass%.

In Example 1 to Example 13 and Comparative Example 1 to Comparative Example 7, core balls having a diameter of 300 µm were prepared. In Comparative Example 8 to Comparative Example 11, solder balls having a diameter of 300 µm were prepared. In the core balls, a diffusion preventing layer having a film thickness of 2 µm of one side was formed by Ni on a core of Cu having a diameter of 250 µm, and a solder layer was formed so as to have a diameter of 300 µm. The solder layer was formed by a known plating method.

Examples of known plating methods include electrolytic plating methods such as barrel plating, a method in which a pump connected to a plating tank generates high-speed turbulent flow in a plating solution of the plating tank to form a plating film on the spherical core by the turbulent flow of the plating solution, and a method in which a plating solution is stirred by high-speed turbulent flow by providing a diaphragm in the plating tank and vibrating at a predetermined frequency to form a plating film on a spherical core by the turbulent flow of the plating solution.

In the electromigration test, using the core balls of each Example and the core balls and solder balls of the Comparative Examples shown in Table 1, a package was produced by performing reflow soldering using a water-soluble flux on a package substrate of a 13 mm × 13 mm size having a Cu electrode of 0.24 mm in diameter. Thereafter, a sample was produced by printing a solder paste on a glass epoxy substrate (FR-4) having a size of 30 mm × 120 mm and a thickness of 1.5 mm, mounting the package produced above and maintaining at a temperature range of 220°C or more for 40 seconds, and performing reflow under a condition of a peak temperature of 245°C.

A resist film having a film thickness of 15 µm was formed on the semiconductor package substrate used for the electromigration test, an opening having an opening diameter of 240 µm was formed on the resist film, and the core balls or solder balls of the Examples or the Comparative Examples were joined in a reflow furnace.

The semiconductor package substrate to which the core balls or the solder balls were thus joined was mounted on a printed wiring board. On the printed wiring board, a solder paste in which the composition of the solder alloy is Sn-3.0Ag-0.5Cu was printed with a thickness of 100 µm and a diameter of 240 µm, and the semiconductor package substrate, to which the core balls or solder balls of the Examples or the Comparative Examples were joined, was connected to the printed wiring board in a reflow furnace. As reflow conditions, the peak temperature was set to 245°C in the atmosphere, preheating was performed at 140 to 160°C for 70 seconds, and main heating was performed at 220°C or more for 40 seconds.

In the EM test, the sample produced above is connected to a compact variable switching power supply (manufactured by Kikusui Electronics Corp.: PAK35-10A), and an electrical current is applied so that the current density is 12 kA/cm² in a silicone oil bath maintained at 150°C. During the application of the current, the electrical resistance of the sample was continuously measured, the test was ended when it had increased 20% from the initial resistance value, and the test time was recorded. As a result of the EM test, the electromigration evaluation (EM evaluation) was satisfied when the test time exceeded 800 hours.

**[Table 1]**

| | Type | Alloy Composition | | | | | EM Evaluation |
|---|---|---|---|---|---|---|---|
| | | Sn | Ag | Cu | Bi | Ni | |
| Example 1 | Cu core ball | Balance | 3.00 | 0.8 | 0.5 | - | 1288 |
| Example 2 | Cu core ball | Balance | 3.00 | 0.8 | 1.5 | - | 1331 |
| Example 3 | Cu core ball | Balance | 4.50 | 0.8 | 1.5 | - | 1388 |
| Example 4 | Cu core ball | Balance | 3.00 | 0.8 | 3 | 0.1 | 1411 |
| Example 5 | Cu core ball | Balance | 3.00 | 0.8 | 3 | 0.02 | 1347 |
| Example 6 | Cu core ball | Balance | 3.00 | 0.8 | 5 | - | 855 |
| Example 7 | Cu core ball | Balance | 0.10 | 0.8 | 1.5 | - | 879 |
| Example 8 | Cu core ball | Balance | 3.50 | 0.8 | 1.5 | - | 1350 |
| Example 9 | Cu core ball | Balance | 3.00 | 0.1 | 1.5 | - | 1319 |
| Example 10 | Cu core ball | Balance | 3.00 | 3 | 1.5 | - | 1365 |
| Example 11 | Cu core ball | Balance | - | 0.75 | 0.5 | - | 825 |
| Example 12 | Cu core ball | Balance | - | 0.75 | 3 | - | 937 |
| Example 13 | Cu core ball | Balance | - | 0.75 | 5 | - | 805 |
| Comparative Example 1 | Cu core ball | Balance | 3.00 | 0.5 | - | - | 785 |
| Comparative Example 2 | Cu core ball | Balance | 3.00 | 0.8 | - | - | 790 |
| Comparative Example 3 | Cu core ball | Balance | - | 0.75 | - | - | 627 |
| Comparative Example 4 | Cu core ball | Balance | 3.00 | 0.8 | 0.2 | - | 796 |
| Comparative Example 5 | Cu core ball | Balance | 3.00 | 0.8 | 10 | - | 228 |
| Comparative Example 6 | Cu core ball | Balance | - | 0.75 | 0.2 | - | 682 |
| Comparative Example 7 | Cu core ball | Balance | - | 0.75 | 10 | - | 144 |
| Comparative Example 8 | Solder ball | Balance | 3.00 | 0.8 | 3 | 0.02 | 62 |
| Comparative Example 9 | Solder ball | Balance | 3.00 | 0.8 | 0.5 | - | 79 |
| Comparative Example 10 | Solder ball | Balance | 3.00 | 0.5 | - | - | 93 |
| Comparative Example 11 | Solder ball | Balance | - | 0.75 | - | - | 60 |

With the Cu core balls of Example 1 to Example 10, having a solder layer made of a Sn-Ag-Cu-Bi based solder alloy having a Bi content of 0.5 mass% or more and 5.0 mass% or less, and the Cu core balls of Example 11 to Example 13 having a solder layer made of a Sn-Cu-Bi based solder alloy having a Bi content of 0.5 mass% or more and 5.0 mass% or less, the test time of the EM evaluation exceeded 800 hours.

With the Cu core ball of Example 2 in which the Bi content is 1.5 mass%, the test time of the EM evaluation exceeded 1300 hours. Although the test time of the EM evaluation tends to decrease when the Bi content is 5.0 mass% or more, the test time of the EM evaluation also exceeded 800 hours with the Cu core ball of Example 6 in which the Bi content is 5.0 mass%.

On the other hand, with the Cu core balls of Comparative Example 1 and Comparative Example 2 having a solder layer made of a Sn-Ag-Cu based solder alloy not containing Bi, and the Cu core ball of Comparative Example 3 having a solder layer made of a Sn-Cu based solder alloy not containing Bi, the test times of the EM evaluation were less than 800 hours.

In addition, even with a Cu core ball having a solder layer made of a Sn-Ag-Cu-Bi based solder alloy, in Comparative Example 4 in which the Bi content was 0.2 mass% and in Comparative Example 5 in which the Bi content was 10.0 mass%, the test times of the EM evaluation were less than 800 hours. Thus, even with a Cu core ball having a solder layer made of a Sn-Ag-Cu-Bi based solder alloy, if the Bi content is less than 0.5 mass%, or more than 5.0 mass%, the test time of the EM evaluation was less than 800 hours and the desired resistance to EM was not obtained.

Furthermore, even with a Cu core ball having a solder layer made of a Sn-Cu-Bi based solder alloy, in Comparative Example 6 in which the Bi content was 0.2 mass% and in Comparative Example 7 in which the Bi content was 10.0 mass%, the test times of the EM evaluation were less than 800 hours. Thus, even with a Cu core ball having a solder layer made of a Sn-Cu-Bi based solder alloy, if the Bi content is less than 0.5 mass%, or more than 5.0 mass%, the test time of the EM evaluation was less than 800 hours and the desired resistance to EM was not obtained.

With the solder ball of Comparative Example 8 made of a Sn-Ag-Cu-Bi-Ni based solder alloy having a Bi content of 3.0 mass% and a Ni content of 0.02 mass%, the test time of the EM evaluation was significantly less than 800 hours, even if the composition of the solder alloy was the same as that of Example 5.

With the solder ball of Comparative Example 9 made of a Sn-Ag-Cu-Bi based solder alloy having a Bi content of 0.5 mass%, the test time of the EM evaluation was significantly less than 800 hours, even if the composition of the solder alloy was the same as that of Example 1.

With the solder ball of Comparative Example 10 made of a Sn-Ag-Cu based solder alloy not containing Bi, and the solder ball of Comparative Example 11 made of a Sn-Cu based solder alloy not containing Bi, the test times of the EM evaluation were also significantly less than 800 hours.

These results show that the effect of suppressing electromigration can be obtained by setting the Bi content to 0.5 mass% or more and 5.0 mass% or less in the solder material in which the solder layer coating the core of a metal is composed of a Sn-Ag-Cu-Bi based solder alloy or a Sn-Cu-Bi based solder alloy. Moreover, it was found that the preferable Bi content is 1.5 mass% or more and 3.0 mass% or less.

It was also found that the effect of suppressing electromigration is not inhibited by setting the Cu content to 0.1 mass% or more and 3.0 mass% or less. Moreover, it was found that by setting the Ag content to more than 0 mass% and 4.5 mass% or less, the better effect of suppressing electromigration is obtained compared with a solder alloy not containing Ag. In Example 3 in which the Ag content was set to 4.5 mass%, the test time of the EM evaluation exceeded 1300 hours. Furthermore, it was found that the effect of suppressing electromigration is obtained even when Ni is contained in an amount of more than 0 mass% and 0.1 mass% or less. In Example 4 in which the Ni content was set to 0.1 mass%, the test time of the EM evaluation exceeded 1400 hours.

### REFERENCE SIGNS LIST

1A core ball
2A core
3A solder layer
30A solder alloy
4 diffusion preventing layer
5A solder bump
6A substrate
60A electrode
7A semiconductor package
70A electrode

## Claims

1. A solder material comprising:
a core of a metal and,
a solder layer coating the core,
wherein the solder layer has:
a Cu content of 0.1 mass% or more and 3.0 mass% or less,
a Bi content of 0.5 mass% or more and 5.0 mass% or less,
a Ag content of 0 mass% or more and 4.5 mass% or less, and
a Ni content of 0 mass% or more and 0.1 mass% or less,
with Sn being the balance.

2. A solder material comprising:
a core of a metal and,
a solder layer coating the core,
wherein the solder layer has:
a Cu content of 0.1 mass% or more and 3.0 mass% or less,
a Bi content of more than 1.0 mass% and 5.0 mass% or less, and
a Ni content of 0 mass% or more and 0.1 mass% or less, and
contains no Ag, with Sn being the balance.

3. The solder material according to claim 1, wherein the Ag content is more than 1.5 mass% and 4.5 mass% or less.

4. The solder material according to any one of claims 1 to 3, wherein the core is a metal of Cu, Ni, Ag, Au, Al, Mo, Mg, Zn, or Co, or an alloy of any combination of the metal.

5. The solder material according to any one of claims 1 to 4, wherein the core is a spherical core ball.

6. The solder material according to any one of claims 1 to 4, wherein the core is a columnar core column.

7. The solder material according to any one of claims 1 to 6, wherein the core coated with a layer consisting of one or more elements selected from Ni and Co is coated with the solder layer.

8. A solder paste using the solder material according to any one of claims 1 to 7.

9. A formed solder using the solder material according to any one of claims 1 to 7.

10. A solder joint using the solder material according to any one of claims 1 to 7.
